# EUROPEAN PATENT SPECIFICATION

(11) **EP 1 848 907 B1**
(45) Date of publication and mention of the grant of the patent: **23.04.2008**
(21) Application number: 06716659.5
(22) Date of filing: 13.02.2006
(51) Int. Cl.: F16K 31/40

(54) **A VALVE FOR PROVIDING A GAS PULSE**
VENTIL ZUR LIEFERUNG EINES GASIMPULSES
SOUPAPE CREANT DES IMPULSIONS DE GAZ

(30) Priority: 17.02.2005 NL 1028317
(43) Date of publication of application: 31.10.2007
(73) Proprietor: ASCO CONTROLS B.V., 3925 BD Scherpenzeel (NL)
(72) Inventor: OOMEN, Tjerk, NL-3925 BD Scherpenzeel (NL)
(74) Representative: Vernout, Robert
(86) International application number: PCT/NL2006/050025
(87) International publication number: WO 2006/088367

(56) References cited:
- EP-A- 1 186 784
- WO-A-20/04070245

## Description

The invention relates to a valve for a gas, comprising a housing provided with an inlet opening and an outlet opening and a movable valve member which can bear against a valve seat for the purpose of closing the valve, with a control chamber being formed on the side of the movable valve member remote from the valve seat, which control chamber comprises the stroke volume of the valve and which is connected, via a throttle channel, to the inlet opening, a vent passage extending in a fixed position between the control chamber and the outlet opening, a control valve that is capable of closing and opening the vent passage in a controlled manner so as to allow gas to escape from the control chamber to the outlet opening, such that the pressure on the part of the other side of the movable valve member, which is in open communication with the inlet opening, moves the movable valve member away from the valve seat and opens the valve.

Such a valve is disclosed in International patent publication WO 99/60292, one feature of which is that opening and/or closing thereof can take place very quickly, so that a large volume of gas can be allowed to pass therethrough within a short time, which renders said valve suitable in particular for providing a short gas pulse. Comparable valves are disclosed in WO 2004/070245 and WO 96/27095, in which the vent holes do not lead to the outlet opening of the valve but to an external vent outlet. Also with these types of valve it is possible to realise a vent hole between the control chamber and the outlet opening by making a few adaptations.

Such gas valves are used for cleaning dust filters in industrial exhaust systems, for example. Such dust filters become choked with dust during use, which causes the resistance of the dust filter to increase. Such a dust filter can be cleaned by applying a gas pulse in a direction opposed to the direction of the normal gas flow through the dust filter. It is important in this connection that an effective gas pulse can be obtained, to which end a gas valve is needed which is capable of opening and closing very quickly and of passing a large amount of gas within a very short period of time.

In many cases it is preferred to vent the control chamber into the outlet opening of the valve rather than into the environment of the valve, since this causes less noise nuisance because the outlet of the valve is usually isolated from the environment and because an extra filter must be installed when venting takes place into the environment of the valve, which filter can moreover become choked.

The vent passage is to carry the gas from the control chamber to the outlet of the valve, where the pressure is lower. This is important for the operation of the valve. Preferably, the vent passage extends to within the outlet opening of the valve. When the valve is to be opened, the control valve is opened, so that the gas can flow through the vent passage from the control chamber into the outlet. As a result, the pressure in the control chamber will decrease and the movable valve member will be lifted from the valve seat once the pressure has sufficiently decreased. As a result, a gas flow is created between the inlet and the outlet of the valve.

As soon as the pressure in the control chamber decreases, gas will flow from the inlet into the control chamber through the throttle channel. When the control valve is closed, the pressure in the control chamber will increase and the valve will return to the valve seat.

As long as the control valve is open, the amount of gas being discharged through the vent passage must be larger than the amount of gas being supplied through the throttle channel in order to keep the valve open. The discharge of gas through the vent passage depends on the pressure buildup in the outlet of the valve, which depends on the construction and the conditions at the outlet side of the valve. In a number of applications, the resistance at the outlet side can rise so high that a negative pressure difference is created, as a result of which the control chamber is filled rather than emptied. Thereby the valve will close again immediately. This causes the pressure in the outlet to decrease again, and the valve will open again. In this way the valve will start to oscillate while the control valve is open, which is undesirable behaviour.

The object of the invention is to provide a more efficient and more reliable valve, in which in particular the extent to which the above-described undesirable behaviour occurs is reduced.

To that end, the vent passage extends beyond the valve seat in the outlet opening, with a non-return valve being provided in or near vent passage, which non-return valve is capable of closing the vent passage so as to prevent gas flowing from the outlet opening to the control chamber in said open position of the valve member. As a result, the vent passage functions independently of the resistance of the outlet of the valve, and the control chamber is prevented from being filled from the outlet. Consequently, the valve will not exhibit the above-described behaviour.

In a special preferred embodiment, the volume of the space between the control valve and the non-return valve amounts to more than 50% of the minimum volume of the control chamber. The volume that is bounded by the movable valve number and the non-return valve, and between which the control valve is positioned, can be divided into three parts. The stroke volume is the variable part of the space in the control chamber and determines how much gas is needed for opening the movable valve member. The dead volume is the minimum volume of the control chamber, i.e. the volume of the control chamber when the valve is fully open. The additional dead volume is the volume of the space between the control valve and the non-return valve.

When the non-return valve closes in the open position of the control valve, the aforesaid three volumes form a space. Said space is filled through the throttle channel, causing the pressure to increase. Said increase will continue until the pressure difference is small enough and the valve closes. The time that is required for this depends on the total volume of the space. It is advantageous to make the additional dead volume between the control valve and the non-return valve as large as possible. This volume is used as a buffer for retarding the pressure buildup through the throttle channel and keeping the valve open as long as possible as long as the control valve is open. When the control valve is closed, only the space of the control chamber will be filled through the throttle channel yet. The time required for reaching the point at which the valve closes is reduced. This achieves that the valve responds very well to the opening and closing of the control valve.

In a preferred embodiment, the movable valve member can move past a valve member that is fixedly disposed in the housing, to which end the valve members jointly have two tubular sliding surfaces of different diameter and two complementary annular sliding edges of correspondingly different diameter that mate therewith, said valve seat being positioned between the sliding surface having the smaller diameter and the sliding surface having the larger diameter, seen in axial direction. The sliding surfaces and the sliding edges mating therewith form seals that bound the stroke volume of the valve. In this way a kind of piston construction is formed, wherein the space between the larger sliding surface and the smaller sliding surface, which varies in length during the stroke, forms an annular stroke volume, which is much smaller compared to the disc-shaped stroke volume of the known membrane valve whilst the valves have an identical stroke length. As a result, the volume being displaced is much smaller, so that the drawbacks mentioned in connection therewith are at least partially eliminated.

Preferably, the two tubular sliding surfaces are positioned on the movable valve member, and the two tubular sliding surfaces are preferably the inwardly directed surfaces. Any other combination is possible within the framework of the invention, however, with one of the tubular sliding surfaces being positioned on the movable valve member and the other being positioned on the fixed valve member, for example.

The smaller diameter is preferably 0.4 - 0.9 times, more preferably 0.5 - 0.8 times, even more preferably 0.6 - 0.7 times smaller than the larger diameter. Likewise preferably, the area between the sliding surface having the smaller diameter and the centre of the edge of the valve seat is 0.3 - 0.7 times, more preferably 0.4 - 0.6 times smaller than the area between the two sliding surfaces, seen in axial direction. It has become apparent that these proportions enable an optimum balance of forces with a minimum volume displacement.

Preferably, the tubular sliding surface are interconnected by means of a gastight connecting part. The tubular surfaces of the movable valve member are preferably made up of two sleeves, the sleeve having the smaller diameter being shorter and being positioned within the sleeve having the larger diameter, which sleeves are interconnected by means of said connecting part on the side of the valve seat, said connecting part forming an annular stop that can bear against the valve seat. In this way a functional and lightweight, movable valve member is obtained.

Preferably, the valve member comprises a surface in the region between the valve seat and the sliding surface having the larger diameter, seen in axial direction, against which the gas in the inlet opening can exert a net force in the direction away from the valve seat in the closed position of the valve after gas has been allowed to escape from the control chamber. In this way the opening of the valve can be initialised in a simple manner when the pressure in the control chamber becomes lower than the pressure in the inlet opening.

Preferably, the valve member comprises a surface in the region between the valve seat and the sliding surface having the smaller diameter, seen in axial direction, against which the gas in the control chamber can exert a net force in the direction of the valve seat in the closed position of the valve. In this way the valve can be held in its closed position when the pressure in the control chamber through the throttle channel is equal to the pressure in the inlet opening and higher than the pressure in the outlet opening.

Preferably, the movable valve member is pressed against the valve seat by biassing means in the absence of a gas pressure. Said biassing means preferably comprise a spring, which is supported on the fixed valve member on the one hand and on the movable valve member on the other hand.

Preferably, said annular sliding edges are present on two flanges that extend from the control chamber into the housing. Since the annular sliding edges are present on the flanges rather than on solid cylinders, material is saved and the valve will be lighter in weight. Likewise preferably, the annular sliding edges are made up of flexible sealing rings, so that gas cannot escape from the control chamber past said edges.

The invention will now be explained in more detail by means of embodiments thereof as shown in the figures, in which:
Fig. 1 is a sectional view of a gas valve in the closed position thereof;
Fig. 2 is a sectional view of the gas valve of Fig. 1 in the open position thereof;
Fig. 3 is a sectional view of an alternative embodiment of the gas valve of figure 1; and
Fig. 4 is a sectional view of an alternative embodiment of a part of a gas valve.

The figures are merely schematic representations of the embodiments, in which like parts are indicated by the same numerals in the various figures.

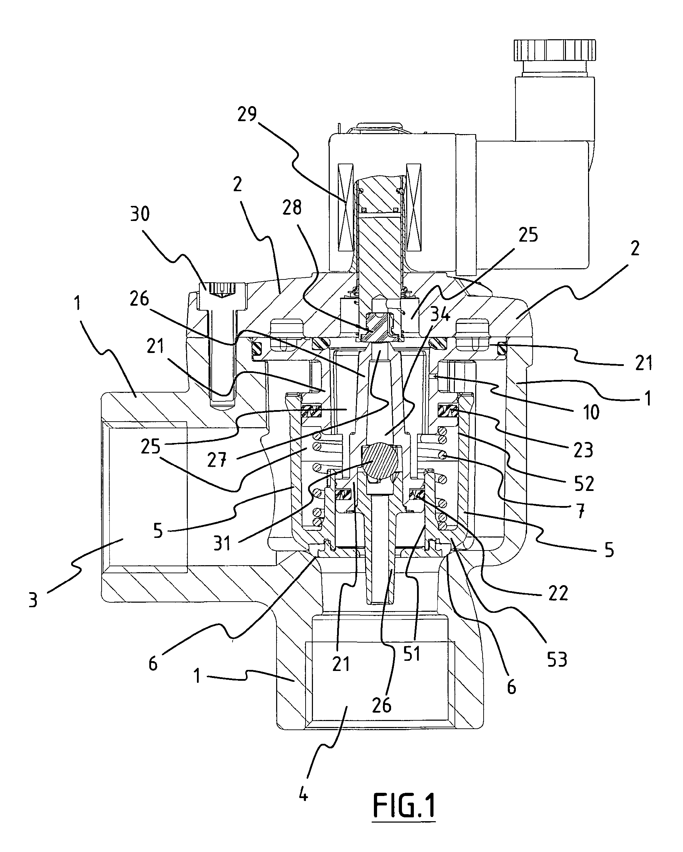

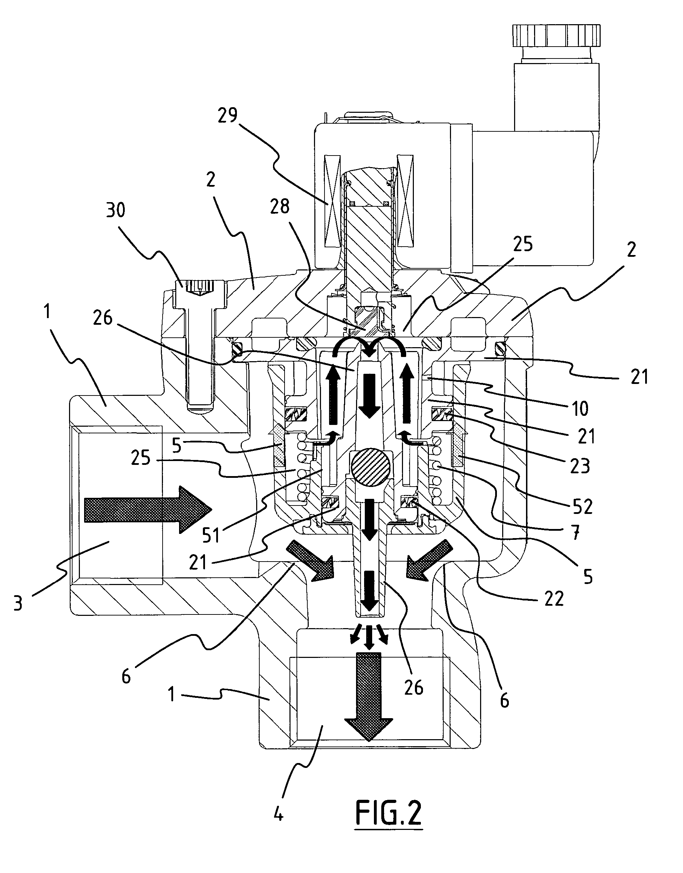

Figure 1 and Figure 2 show the various parts of the gas valve in sectional view. The gas valve has a housing consisting of a valve casing 1 and a cover 2. The valve casing 1 is provided with a gas inlet opening 3 and a gas outlet opening 4. Both openings are provided with connecting means, so that gas pipes can be connected thereto. In the illustrated embodiment, said means consist of internal screw thread in the openings 3, 4, so that an externally threaded end of a pipe can be screwed into said openings. A gastight seal can be obtained by selecting the correct type of screw thread or by applying a sealant thereto.

In the position of the gas valve that is shown in Figure 1, said gas valve is closed, and a valve member 5 bears against the valve seat 6. The movable valve member 5 comprises two cylindrical parts, viz. an inner cylinder having a cylindrical internal surface 51 and an outer cylinder having a cylindrical internal surface 52, which are connected at the bottom side by means of an annular stop 53. The upper side of the inner internal surface 51 extends about half as high as the upper side of the outer internal surface 52.

The valve member 5 is movably mounted to a fixed valve member or valve holder 21. The valve holder 21 comprises a lower flange comprising a sealing ring of plastic material with an outer edge 22 and an upper flange comprising a sealing ring of plastic material with an outer edge 23. The diameter of the lower outer edge 22 corresponds to that of the inner internal surface 51, and the diameter of the upper outer edge 23 corresponds to that of the outer internal surface 52. In this way the cylindrical internal surfaces 51, 52 of the movable valve member are capable of gastight, sliding movement in vertical direction over the respective annular outer edges 22, 23.

The outer side and the bottom side of the valve member 5, insofar as it extends outside the valve seat 6, are in direct contact with the gas inlet opening 3, so that the gas pressure of the gas being supplied prevails on this side of the valve member. Present on the other side of the valve member, in the valve holder 21 (the fixed valve member), is a control chamber 21, which also comprises the annular stroke volume of the valve between the fixed valve member and the movable valve member. Present within said annular stroke volume is furthermore a spring 7, which bears against the fixed valve member 21 on one side and which is capable of pressing the movable valve member 5 against the valve seat 6. The control chamber 25 is connected to the gas inlet opening by means of a throttle channel 10. A vent passage 26 extends centrally in the fixed valve member 21, between the control chamber 25 and the gas outlet opening 4. At the upper side, the vent passage 26 is provided with an opening 27, which can be closed by a control valve 28 that is actuated by an electromagnet 29 mounted in the cover 2 by means of a screw 30.

The operation of the gas valve that is shown in Figures 1 and 2 will now be explained in more detail. As long as the opening 27 is blocked via the control valve 28, the gas valve will be closed as a result of the movable valve member 5 bearing against the valve seat 6. The gas supply pressure in the gas inlet opening 3 is higher than the gas pressure in the gas outlet opening 4 in that position. The gas supply pressure not only prevails in the gas inlet opening 3, but also in the control chamber 25, which is connected to the gas inlet opening via the throttle channel 10. As long as the opening 27 is closed, the resultant of the forces being exerted on the movable valve member 5 will be directed downwards, so that the gas valve will be in its closed position. The gas valve can be opened by opening the control valve 28, as a result of which gas can escape from the control chamber 25 via the opening 27 in the vent passage 26 and the gas pressure in the control chamber 25 falls out. The resultant of the force exerted on the movable valve member 5 will be directed upwards, and the valve will open against the spring pressure of the spring 7. The amount of gas that can be supplied via the throttle channel 10 is not large enough for building up sufficient pressure in the control chamber 25, so that the supply gas pressure that prevails at the bottom side of the movable valve member 5 will keep the gas valve open until the discharge of gas via the vent passage 26 is stopped, so that a pressure will build up in the control chamber 25 again as a result of gas being supplied to the control chamber 25 via the throttle channel 10. In that situation, substantially the same gas pressure prevails on the two sides of the movable valve member 5, and the valve member 5 will be closed again partially under the influence of the spring force of the spring 7.

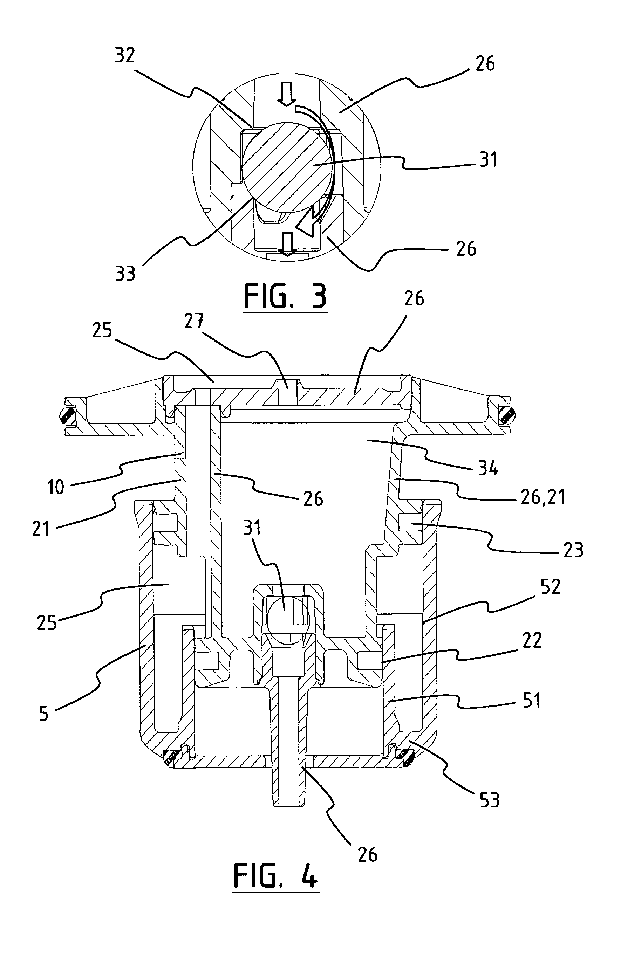

To prevent gas from flowing back from the outlet 4 to the control chamber 25 through the vent passage 26, a non-return valve 31 is provided centrally in the vent passage 26, which non-return valve is shown in more detail in figure 3, which shows said valve in the open position thereof. The non-return valve 31 consists of a spherical body, which is retained in a widened part of the vent passage 26. A valve seat 32 is present at the upper side of said widened part, against which the sphere 31 can bear, thereby closing the vent passage 26. A knurled seat 33 is provided at the bottom side of the widened part, against which the sphere 31 can bear, in such a manner that sufficient space is available so that gas can flow past the sphere 31.

Figure 4 shows an alternative embodiment of the gas valve, in which the vent passage 26 comprises an extra large space between the opening 27, which is closed by the control valve 28, and the non-return valve 31, which forms the additional dead volume 34.

The embodiments as described therein are to be considered as exemplary embodiments, and it will be apparent to a person skilled in the art who has become acquainted with the invention that many variations in the implementation of the invention are possible.

## Claims

1. A valve for a gas comprising a housing (1, 2) provided with an inlet opening (3) and an outlet opening (4) and a movable valve member (5) which can bear against a valve seat (6) for the purpose of closing the valve, with a control chamber (25) being formed on the side of the movable valve member (5) remote from the valve seat (6), which control chamber (25) comprises the stroke volume of the valve and which is connected, via a throttle channel (10), to the inlet opening (3), a vent passage (26) extending in a fixed position between the control chamber (25) and the outlet opening (4), a control valve (28) that is capable of closing and opening the vent passage (26) in a controlled manner so as to allow gas to escape from the control chamber (25) to the outlet opening (4), such that the pressure on the part of the other side of the movable valve member (5), which is in open communication with the inlet opening (3), moves the movable valve member (5) away from the valve seat (6) and opens the valve, **characterized in that** the vent passage (26) extends beyond the valve seat in the outlet opening (4), with a non-return valve (31, 33) being provided in or near the vent passage (26), which non-return valve (31, 33) is capable of closing the vent passage (26) so as to prevent gas flowing from the outlet opening (4) to the control chamber (25) in said open position of the valve member.

2. A valve according to claim 1, **characterized in that** the non-return valve (31, 33) is positioned between the ends of the vent passage (26).

3. A valve according to claim 1 or 2, **characterized in that** the non-return valve comprises a sphere (31) and a valve seat (33) in the vent passage (26), against which the sphere (31) can be pressed by means of a gas flow and gas pressure.

4. A valve according to any one of the preceding claims 1, 2 or 3, **characterized in that** the volume (34) of the space between the control valve (28) and the non-return valve (31, 33) amounts to more than 50% of the minimum volume of the control chamber (25).

5. A valve according to any one of the preceding claims 1 - 4, **characterized in that** the movable valve member (5) can move past a valve member (21) that is fixedly disposed in the housing, to which end the valve members (5; 21) jointly have two tubular sliding surfaces (51; 52) of different diameter and two complementary annular sliding edges (22; 23) of correspondingly different diameter that mate therewith, said valve seat (6) being positioned between the sliding surface (51) having the smaller diameter and the sliding surface (52) having the larger diameter, seen in axial direction.

6. A valve according claim 5, **characterized in that** the two tubular sliding surfaces (51; 52) are positioned on the movable valve member.

7. A valve according to 5 or 6, **characterized in that** the two tubular sliding surfaces (51; 52) are the inwardly directed surfaces.

8. A valve according to any one of the preceding claims 5, 6 or 7, **characterized in that** the sliding surface (511) having the smaller diameter is positioned closer to the valve seat (6) than the sliding surface (52) having the larger diameter.

9. A valve according to claim 8, **characterized in that** the tubular sliding surfaces (51, 52) are positioned on the movable valve member (5), being made up of two sleeves, the sleeve having the smaller diameter being shorter and being positioned within the sleeve having the larger diameter, which sleeves are interconnected by means of said connecting part (53) on the side of the valve seat, said connecting part (53) forming an annular stop that can bear against the valve seat (6).

## Patentansprüche

1. Ventil für ein Gas, mit einem Gehäuse (1, 2) mit einer Einlassöffnung (3) und einer Auslassöffnung (4) und einem beweglichen Ventilglied (5), das zum Schließen des Ventils an einem Ventilsitz (6) anliegen kann, mit einer auf der vom Ventilsitz (6) abgewandten Seite des beweglichen Ventilgliedes (5) angeordneten Steuerkammer (25), wobei die Steuerkammer (25) das Hubvolumen des Ventils beinhaltet und über einen Drosselkanal (10) mit der Einlassöffnung (3) verbunden ist, wobei sich ein Entlüftungskanal (26) in fester Lage zwischen der Steuerkammer (25) und der Auslassöffnung (4) erstreckt, und mit einem Steuerventil (28), das imstande ist, den Entlüftungskanal (26) gesteuert zu schließen und zu öffnen, um Gas aus der Steuerkammer (25) zur Auslassöffnung (4) entweichen zu lassen, so dass der Druck auf der anderen Seite des beweglichen Ventilgliedes (5), die offen mit der Einlassöffnung (3) kommuniziert, das Ventilglied (5) vom Ventilsitz (6) weg verschiebt und das Ventil öffnet, **dadurch gekennzeichnet, dass** sich der Entlüftungskanal (26) über den Ventilsitz hinaus in die Auslassöffnung (4) erstreckt, wobei in oder bei dem Entlüftungskanal (26) ein Rückschlagventil (31, 33) vorgesehen ist und das besagte Rückschlagventil (31, 33) imstande ist, den Entlüftungskanal (26) zu schließen, um den Gasfluss aus der Auslassöffnung (4) zur Steuerkammer (25) in der besagten Offenstellung des Ventilgliedes zu verhindern.

2. Ventil nach Anspruch 1, **dadurch gekennzeichnet, dass** das Rückschlagventil (31, 33) zwischen den Enden des Entlüftungskanals (26) angeordnet ist.

3. Ventil nach Anspruch 1 oder 2, **dadurch gekennzeichnet, dass** das Rückschlagventil (31, 33) eine Kugel (31) und einen Ventilsitz (33) im Entlüftungskanal (26) aufweist, gegen den die Kugel (31) vom Gasfluss und vom Gasdruck gedrückt werden kann.

4. Ventil nach einem der vorhergehenden Ansprüche 1, 2 oder 3, **dadurch gekennzeichnet, dass** das Volumen (34) des Raums zwischen dem Steuerventil (28) und dem Rückschlagventil (31, 33) mehr als 50% des Mindestvolumens der Steuerkammer (25) beträgt.

5. Ventil nach einem der vorhergehenden Ansprüche 1 bis 4, **dadurch gekennzeichnet, dass** das bewegliche Ventilglied (5) an einem fest im Gehäuse angeordneten Ventilglied (21) vorbei fahren kann, wozu die Ventilglieder (5; 21) zwei rohrförmige Gleitflächen (51; 52) unterschiedlichen Durchmessers und zwei dazu passende ringförmige Gleitkanten (22; 23) entsprechend unterschiedlichen Durchmessers aufweisen, wobei der besagte Ventilsitz (6) in axialer Richtung betrachtet zwischen der Gleitfläche (51) mit dem kleineren Durchmesser und der Gleitfläche (52) mit dem größeren Durchmesser angeordnet ist.

6. Ventil nach Anspruch 5, **dadurch gekennzeichnet, dass** die beiden rohrförmigen Gleitflächen (51; 52) am beweglichen Ventilglied angeordnet sind.

7. Ventil nach Anspruch 5 oder 6, **dadurch gekennzeichnet, dass** die beiden rohrförmigen Gleitflächen (51; 52) nach innen gerichtet sind.

8. Ventil nach einem der vorhergehenden Ansprüche 5, 6 oder 7, **dadurch gekennzeichnet, dass** die Gleitfläche (511) mit dem kleineren Durchmesser näher beim Ventilsitz (6) angeordnet ist als die Gleitfläche (52) mit dem größeren Durchmesser.

9. Ventil nach Anspruch 8, **dadurch gekennzeichnet, dass** die rohrförmigen Gleitflächen (51, 52) am beweglichen Ventilglied (5) angeordnet und aus zwei Hülsen zusammengesetzt sind, wobei die Hülse mit dem kleineren Durchmesser kürzer und innerhalb der Hülse mit dem größeren Durchmesser angeordnet ist und die Hülsen mittels eines Verbindungsstücks (53) auf der Seite des Ventilsitzes miteinander verbunden sind und das besagte Verbindungsstück (53) einen ringförmigen Anschlag bildet, der am Ventilsitz (6) anliegen kann.

## Revendications

1. Soupape pour un gaz comprenant un boîtier (1, 2) muni d'un orifice d'admission (3) et d'un orifice de sortie (4) et d'un élément (5) de soupape amovible qui peut appuyer sur un siège (6) de soupape dans le but de fermer la soupape, une chambre (25) de régulation étant formée sur le côté de l'élément (5) de soupape amovible éloigné du siège (6) de soupape laquelle chambre (25) de régulation comprend le volume de battement de la soupape et qui est reliée, via un canal d'étranglement (10) à l'orifice d'admission (3), un passage (26) d'évent s'étendant dans une position fixe entre la chambre (25) de régulation et l'orifice de sortie (4), une soupape (28) de régulation qui est capable de fermer et d'ouvrir le passage (26) d'évent d'une manière régulée afin de permettre l'échappement de gaz de la chambre (25) de régulation vers l'orifice (4) de sortie, de sorte que la pression sur la partie de l'autre côté de l'élément (5) de soupape amovible, qui est en communication ouverte avec l'orifice d'admission (3), déplace l'élément (5) de soupape amovible en l'éloignant du siège (6) de soupape et ouvre la soupape, **caractérisée en ce que** le passage (26) d'évent s'étend au-delà du siège de soupape dans l'orifice de sortie (4), avec un clapet anti-retour (31, 33) prévu dans le passage (26) d'évent ou à proximité de celui-ci, lequel clapet anti-retour (31, 33) est capable de fermer le passage (26) d'évent de manière à empêcher que du gaz ne s'écoule de l'orifice de sortie (4) à la chambre (25) de régulation dans ladite position ouverte de l'élément de soupape.

2. Soupape selon la revendication 1, **caractérisé en ce que** le clapet anti-retour (31;33) est placé entre les extrémités du passage (26) d'évent.

3. Soupape selon la revendication 1 ou la revendication 2, **caractérisée en ce que** le clapet anti-retour comprend une sphère (31) et un siège (33) de soupape dans le passage (26) d'évent, contre lequel la sphère (31) peut exercer une pression au moyen d'un écoulement de gaz et d'une pression de gaz.

4. Soupape selon l'une quelconque des revendications 1, 2 ou 3, **caractérisée en ce que** le volume (34) de l'espace entre la soupape (28) de régulation et le clapet anti-retour (31, 33) s'élève à plus de 50% du volume minimum de la chambre (25) de régulation.

5. Soupape selon l'une quelconque des revendications précédentes 1 à 4, **caractérisée en ce que** l'élément (5) de soupape amovible peut se déplacer au-delà d'un élément (21) de soupape qui est disposé de manière fixe dans le boîtier, à l'extrémité duquel les éléments (5 ; 21) de soupape ont conjointement deux surfaces coulissantes tubulaires (51 ; 52) de diamètres différents et deux bords coulissants annulaires complémentaires (22 ; 23) de diamètres correspondants différents qui s'accouplent avec ces dernières, ledit siège (6) de soupape étant placé entre la surface coulissante (51) ayant le plus petit diamètre et la surface coulissante (52) ayant le plus grand diamètre, vues dans la direction axiale.

6. Soupape selon la revendication 5, **caractérisée en ce que** les deux surfaces coulissantes tubulaires (51 ; 52) sont placées sur l'élément de soupape amovible.

7. Soupape selon les revendications 5 ou 6, **caractérisée en ce**ux que les deux surfaces coulissantes tubulaires (51 ; 52) sont les surfaces tournées vers l'intérieur.

8. Soupape selon l'une quelconque des revendications précédentes 5, 6 ou 7, **caractérisée en ce que** la surface coulissante (511) ayant le plus petit diamètre est placée plus près du siège (6) de soupape que la surface coulissante (52) ayant le plus grand diamètre.

9. Soupape selon la revendication 8, **caractérisée en ce que** les surfaces coulissantes tubulaires (51 ; 52) sont placées sur l'élément (5) de soupape amovible, et sont composées de deux manchons, le manchon ayant le diamètre le plus petit étant plus court et placé à l'intérieur du manchon ayant le diamètre le plus grand, lesquels manchons sont reliés entre eux au moyen de ladite partie de raccordement (53) sur le côté du siège de soupape, ladite partie de raccordement (53= formant une butée annulaire qui peut appuyer sur le siège (6) de soupape.
